# EUROPEAN PATENT SPECIFICATION

(11) **EP 3 798 197 B1**
(45) Date of publication and mention of the grant of the patent: **18.09.2024**
(21) Application number: 19808435.2
(22) Date of filing: 21.05.2019
(51) Int. Cl.: C03C 27/12, B32B 5/18, B32B 17/06, C03C 27/10

(54) **GLASS LAMINATE**
GLASLAMINAT
STRATIFIÉ DE VERRE

(30) Priority: 21.05.2018 JP 2018096901
(43) Date of publication of application: 31.03.2021
(73) Proprietor: NIPPON SHEET GLASS COMPANY, LIMITED, Tokyo 108-6321 (JP)
(72) Inventor: KOYO Mizuho, Tokyo 108-6321 (JP); TERAOKA Yuki, Tokyo 108-6321 (JP)
(74) Representative: Cabinet Beau de Loménie
(86) International application number: PCT/JP2019/020074
(87) International publication number: WO 2019/225593

(56) References cited:
- EP-A1- 1 698 600
- WO-A1-2013/089233
- JP-A- 2000 344 553
- JP-A- 2006 052 116
- JP-A- 2006 506 302
- JP-A- 2007 526 204
- JP-A- 2013 136 482
- JP-A- H0 340 944
- JP-A- H08 104 543
- JP-A- H08 104 546
- JP-A- H08 210 041

## Description

### TECHNICAL FIELD

The present invention relates to a glass laminate including a foamable interlayer including a hydrous alkaline silicate.

### BACKGROUND ART

A glass laminate including a plurality of glass sheets and a hydrous alkaline silicate-including foamable interlayer disposed between the plurality of glass sheets is used as a transparent fire-resistant wall material. When this glass laminate is heated in fire to increase its temperature, the hydrous alkaline silicate included in the foamable interlayer is foamed and the foamable interlayer starts to show improved heat shielding properties.

A hydrous alkaline silicate is foamed by ultraviolet irradiation, too. Therefore, glass laminates including a foamable interlayer sometimes gradually turn cloudy through long-term use and decrease their transparency. There is a proposal to additionally dispose an ultraviolet-absorbing layer in a glass laminate in order to reduce ultraviolet-induced cloudiness. Typical examples of the ultraviolet-absorbing layer include metal oxide thin films formed by thermal decomposition, vacuum deposition, or the like (for example, Patent Literature 1).

### CITATION LIST

### Patent Literature

Patent Literature 1: GB 2150463 A

WO2013/089233 A1 discloses a fire protection film comprising a resin film and a foamable heat insulating layer laminated thereon, characterized in that an ultraviolet ray shielding layer containing inorganic fine particles is provided between the resin film and the foamable heat insulating layer. The ultraviolet-ray shielding layer is made of inorganic type microparticles such as zinc oxide, titanium oxide, cerium oxide, zirconium oxide and iron oxide. The foamable heat insulating layer is directly applied to a glass sheet, that may be single or multilayered glass and is made of water glass, or hydrous sodium silicate.

### SUMMARY OF INVENTION

### Technical Problem

Practically, however, metal oxide thin films impart only very limited ultraviolet blocking properties because a glass laminate including a thick metal oxide thin film has a decreased visible transmittance.

Therefore, the present invention aims to provide a glass laminate reducing cloudiness for a longer period of time even when used in an environment where the glass laminate is exposed to ultraviolet irradiation.

### Solution to Problem

The present invention provides a glass laminate comprising a plurality of glass sheets; a foamable interlayer comprising a hydrous alkaline silicate and disposed between two glass sheets selected from the plurality of glass sheets; and an ultraviolet-absorbing layer, wherein the ultraviolet-absorbing layer is disposed between one of two outermost glass sheets of the plurality of glass sheets and the foamable interlayer, wherein an ultraviolet-absorbing component in the form of fine particles is dispersed in the ultraviolet-absorbing layer, and the ultraviolet-absorbing layer has a light transmittance of less than 50% at a wavelength of 380 nm. Other embodiments are defined in appended claims 2-15.

### Advantageous Effects of Invention

According to the present invention, a glass laminate suitable for sufficiently reducing ultraviolet-induced cloudiness can be provided.

### BRIEF DESCRIPTION OF DRAWINGS

FIG. 1 is a cross-sectional view showing a configuration of a glass laminate according to an embodiment 1 of the present invention.
FIG. 2 is a cross-sectional view showing a configuration of a glass laminate according to an embodiment 2 of the present invention.
FIG. 3 is a cross-sectional view showing a configuration of a glass laminate according to an embodiment 3 of the present invention.
FIG. 4 shows a scanning electron microscope (SEM) image of a cross-section of a glass laminate of Example 9.
FIG. 5A shows an energy dispersive X-ray spectroscopy (EDX) spectrum of a foamable interlayer included in the glass laminate of Example 9.
FIG. 5B shows an EDX spectrum of an ultraviolet-absorbing layer included in the glass laminate of Example 9.
FIG. 5C shows an EDX spectrum of an underlayer included in the glass laminate of Example 9.
FIG. 6 shows a SEM image of a cross-section of a glass laminate of Example 13.
FIG. 7 shows a SEM image of a cross-section of a glass laminate of Example 15.
FIG. 8A shows an EDX spectrum of a foamable interlayer included in the glass laminate of Example 15.
FIG. 8B shows an EDX spectrum of an ultraviolet-absorbing layer included in the glass laminate of Example 15.
FIG. 8C shows an EDX spectrum of an underlayer included in the glass laminate of Example 15.

### DESCRIPTION OF EMBODIMENTS

In an embodiment of the present invention, the ultraviolet-absorbing layer further includes a matrix including a hydrous alkaline silicate in addition to the ultraviolet-absorbing component in the form of fine particles.

In an embodiment of the present invention, the ultraviolet-absorbing layer includes a matrix including silica as a main component in addition to the ultraviolet-absorbing component in the form of fine particles.

In an embodiment of the present invention, the percentage content of the silica in the matrix is 80 wt% or more.

In an embodiment of the present invention, the matrix includes an alkali metal oxide in addition to the silica.

In an embodiment of the present invention, the molar ratio (R₂O/SiO₂) of the alkali metal oxide to the silica is 0.001 to 0.5 in the matrix.

In an embodiment of the present invention, the alkali metal oxide included in the matrix is Na₂O.

In an embodiment of the present invention, the percentage content of the ultraviolet-absorbing component in the ultraviolet-absorbing layer is 40 wt% or more.

In an embodiment of the present invention, the ultraviolet-absorbing layer further includes an organic component, and the percentage content of the organic component in the ultraviolet-absorbing layer is 0.1 wt% or more.

In an embodiment of the present invention, the ultraviolet-absorbing layer is in contact with the foamable interlayer, the ultraviolet-absorbing layer includes an ultraviolet-absorbing component, and the ultraviolet-absorbing component includes at least one selected from the group consisting of Ti, Zn, and Ce.

In an embodiment of the present invention, the ultraviolet-absorbing layer includes an ultraviolet-absorbing component, and the ultraviolet-absorbing component includes at least one selected from the group consisting of Zn and Ce.

In an embodiment of the present invention, the ultraviolet-absorbing component includes an oxide.

In an embodiment of the present invention, the ultraviolet-absorbing layer includes cerium oxide, and the content of cerium oxide in the ultraviolet-absorbing layer is 0.25 mg or more and 5.0 mg or less per cm² of a principal surface of the ultraviolet-absorbing layer in terms of CeO₂ content.

In an embodiment of the present invention, one principal surface of the ultraviolet-absorbing layer is in contact with a principal surface of one of the two outermost glass sheets of the plurality of glass sheets, and the other principal surface of the ultraviolet-absorbing layer is in contact with a principal surface of the foamable interlayer.

In an embodiment of the present invention, the glass laminate further includes an underlayer having a thickness of 50 µm or less and disposed between one of the two outermost glass sheets of the plurality of glass sheets and the ultraviolet-absorbing layer.

In an embodiment of the present invention, the underlayer is in contact with both one of the two outermost glass sheets of the plurality of glass sheets and the ultraviolet-absorbing layer.

In an embodiment of the present invention, the underlayer includes silica and an alkali metal oxide.

In an embodiment of the present invention, the percentage content of the silica in the underlayer is higher than the percentage content of the alkali metal oxide in the underlayer.

In an embodiment of the present invention, the alkali metal oxide included in the underlayer is the same as an alkali metal oxide included in the hydrous alkaline silicate in the foamable interlayer.

In an embodiment of the present invention, the percentage content of the alkali metal oxide in the underlayer is lower than the percentage content of an alkali metal oxide in the foamable interlayer.

In an embodiment of the present invention, when the molar ratio (R₂O/SiO₂) of the alkali metal oxide to the silica in the underlayer is defined as R1 and the molar ratio (R₂O/SiO₂) of an alkali metal oxide to silica in the foamable interlayer is defined as R2, the ratio (R1/R2) of R1 to R2 is 0.5 to 1.2.

In an embodiment of the present invention, the ultraviolet-absorbing layer is in contact with the foamable interlayer, and the ultraviolet-absorbing layer includes a hydrous alkaline silicate as a main component.

In an embodiment of the present invention, the ultraviolet-absorbing layer includes hydrous lithium silicate as a main component.

In an embodiment of the present invention, the ultraviolet-absorbing layer includes hydrous sodium silicate as a main component.

In an embodiment of the present invention, the molar ratio (SiO₂/Na₂O) of SiO₂ to Na₂O is 1 to 20 in the ultraviolet-absorbing layer.

In an embodiment of the present invention, the physical thickness of the ultraviolet-absorbing layer is 0.1 pm or more and 200 pm or less.

In an embodiment of the present invention, the glass laminate has a light transmittance of 70% or more at a wavelength of 550 nm.

Hereinafter, the present invention will be described in detail with reference to the drawings. The following description is not intended to limit the present invention to specific embodiments.

### <Embodiment 1>

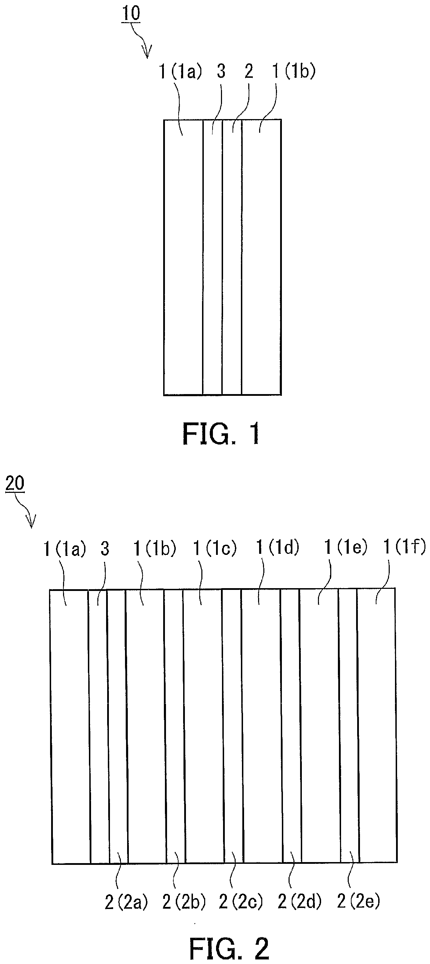

As shown in FIG. 1, a glass laminate 10 according to an embodiment 1 includes a plurality of glass sheets 1, a foamable interlayer 2 including a hydrous alkaline silicate, and an ultraviolet-absorbing layer 3. Specifically, the glass laminate 10 includes two glass sheets 1a and 1b, and the glass sheets 1a and 1b are disposed to sandwich the foamable interlayer 2 and the ultraviolet-absorbing layer 3. The foamable interlayer 2 is in direct contact with the glass sheet 1b. The ultraviolet-absorbing layer 3 is disposed between the glass sheet 1a and the foamable interlayer 2. The ultraviolet-absorbing layer 3 is in direct contact with both the glass sheet 1a and the foamable interlayer 2. Specifically, one principal surface (a surface having the largest area) of the ultraviolet-absorbing layer 3 is in contact with a principal surface of the glass sheet 1a. The other principal surface of the ultraviolet-absorbing layer 3 is in contact with a principal surface of the foamable interlayer 2. The glass laminate 10 is used in such a manner that the ultraviolet-absorbing layer 3 is located closer to a side from which an ultraviolet ray is incident, commonly closer to the outdoor, than the foamable interlayer 2 is.

The ultraviolet-absorbing layer 3 has a light transmittance of less than 50% at a wavelength of 380 nm. The wavelength of 380 nm is a typical wavelength of an ultraviolet ray. The ultraviolet-absorbing layer 3 sufficiently absorbs an ultraviolet ray incident on the glass laminate 10 from the glass sheet 1a side. Thus, the ultraviolet-absorbing layer 3 can sufficiently decrease the amount of an ultraviolet ray incident on the foamable interlayer 2. This reduces foaming of the hydrous alkaline silicate included in the foamable interlayer 2. That is, ultraviolet-induced cloudiness of the glass laminate 10 can be sufficiently reduced.

The ultraviolet-absorbing layer 3 preferably has a light transmittance of 45% or less and more preferably 40% or less at a wavelength of 380 nm. The lower limit of the light transmittance of the ultraviolet-absorbing layer 3 at a wavelength of 380 nm is not limited to a particular one. The ultraviolet-absorbing layer 3 has a light transmittance of, for example, 5% or more at a wavelength of 380 nm.

Since the glass laminate 10 includes the ultraviolet-absorbing layer 3, the glass laminate 10 has a light transmittance of, for example, less than 50%, preferably 45% or less, and more preferably 40% or less at a wavelength of 380 nm. The glass laminate 10 has a light transmittance of, for example, 5% or more at a wavelength of 380 nm.

The glass laminate 10 has a light transmittance of, for example, 70% or more and preferably 80% or more at a wavelength of 550 nm, or may have a light transmittance of, preferably, 90% or more at a wavelength of 550 nm. The wavelength of 550 nm is a wavelength at which the visual sensitivity is high. The glass laminate 10 of the present embodiment maintains its light transmittance at a wavelength of 550 nm at a high level because of sufficiently reduced ultraviolet-induced cloudiness of the glass laminate 10.

The haze ratio of the glass laminate 10 is, for example, 5% or less, preferably less than 3%, more preferably 2% or less, even more preferably less than 1%, particularly preferably 0.6% or less, and most preferably 0.2% or less. The glass laminate 10 of the present embodiment maintains its haze ratio at a low level because of sufficiently reduced ultraviolet-induced cloudiness of the glass laminate 10. The haze ratio of the glass laminate 10 can be measured by a method conforming to JIS K 7136: 2000.

### (Glass sheet)

The plurality of glass sheets 1 is not particularly limited. Each of the plurality of glass sheets 1 may be a float glass sheet or a figured glass. A surface of the float glass sheet has a high smoothness. The arithmetic average roughness Ra of the surface of the float glass sheet is preferably 1 nm or less and more preferably 0.5 nm or less. The arithmetic average roughness Ra is defined in JIS B 0601: 2013.

A surface of the figured glass has macroscopic asperities which are large enough to be observed with the naked eye. The macroscopic asperities refer to asperities for which the mean spacing RSm is on the order of sub-millimeters or more. The mean spacing RSm refers to the average of lengths of peak-valley periods which are determined based on points at which a roughness profile intersects a mean line. The macroscopic asperities can be confirmed by setting an evaluation length on the order of centimeters in the roughness profile. The mean spacing RSm of the asperities on the surface of the figured glass may be 0.3 mm or more, 0.4 mm or more, or 0.45 mm or more. The mean spacing RSm thereof may be 2.5 mm or less, 2.1 mm or less, 2.0 mm or less, or 1.5 mm or less. It is preferable that the surface asperities of the figured glass have a maximum height Rz of 0.5 pm to 10 pm, in particular 1 pm to 8 pm, as well as having a mean spacing RSm within the above range. The mean spacing RSm and the maximum height Rz are defined in JIS B 0601: 2013. Even such a figured glass can have an arithmetic average roughness Ra of several nanometers or less (for example, 1 nm or less), for example, when the figured glass is examined by surface roughness measurement in which the evaluation length in the roughness profile is several hundreds of nanometers. That is, a surface of the figured glass can have a microscopically excellent smoothness. Examples of the surface roughness measurement in which the evaluation length is several hundreds of nanometers include atomic force microscope (AFM) observation.

The composition of the plurality of glass sheets 1 may be the same as that of a conventional figured glass, an architectural sheet glass, an automotive sheet glass, or the like. The percentage content of iron oxide in the plurality of glass sheets 1 may be 0.06 wt% or less or 0.02 wt% or less in terms of Fe₂O₃ content. Iron oxide is a typical coloring component. When the plurality of glass sheets 1 is colored glass, the percentage content of iron oxide in the plurality of glass sheets 1 may be 0.3 wt% or more and 1.5 wt% or less in terms of Fe₂O₃ content.

The thickness of each of the plurality of glass sheets 1 may be 1.0 mm to 10.0 mm, 1.5 mm to 5.0 mm, or 2.0 mm to 4.0 mm.

A coating may be formed on a surface of at least one glass sheet 1 selected from the plurality of glass sheets 1. That is, the glass laminate 10 may further include a coating. Examples of the coating include a low-emissivity film (low-E film) and a photocatalytic self-cleaning film. Examples of a glass sheet with a photocatalytic self-cleaning film include Active manufactured by Nippon Sheet Glass Co., Ltd.

### (Foamable interlayer)

The foamable interlayer 2 is not particularly limited as long as the foamable interlayer 2 includes the hydrous alkaline silicate. The foamable interlayer 2 includes, for example, the hydrous alkaline silicate as its main component. The term "main component" herein refers to a component whose percentage content is highest on a mass basis. The foamable interlayer 2 may further include a polyhydric alcohol. Examples of the polyhydric alcohol include ethylene glycol and glycerin. The polyhydric alcohol contributes to improvement of the stability of the foamable interlayer including the hydrous alkaline silicate. The preferred percentage content of the polyhydric alcohol in the foamable interlayer 2 is 5 to 20 wt%. Meanwhile, the foamable interlayer 2 may consist essentially of the hydrous alkaline silicate. That "the foamable interlayer 2 consists essentially of the hydrous alkaline silicate" herein means that the percentage content of the hydrous alkaline silicate in the foamable interlayer 2 is 90 wt% or more and preferably 95 wt% or more. Examples of the hydrous alkaline silicate included in the foamable interlayer 2 include hydrous sodium silicate (silicate of soda). The hydrous alkaline silicate included in the foamable interlayer 2 may be hydrous lithium silicate or hydrous potassium silicate.

The water content of the foamable interlayer 2 is, for example, 10 wt% to 40 wt% and preferably 20 wt% to 30 wt%. With the water content of the foamable interlayer 2 in the appropriate range, the hydrous alkaline silicate can be foamed sufficiently.

In the foamable interlayer 2, the molar ratio (SiO₂/M₂O) of silicon oxide (SiO₂) to an alkali metal oxide (M₂O) is, for example, 1 to 20, preferably 2 to 10, and more preferably 3 to 8. The percentage content of the alkali metal oxide in the foamable interlayer 2 is, for example, 10 wt% to 20 wt%.

The thickness of the foamable interlayer 2 is, for example, 0.3 mm to 10 mm, preferably 0.5 mm to 2.0 mm, and more preferably 0.7 mm to 1.6 mm.

### (Ultraviolet-absorbing layer)

The ultraviolet-absorbing layer 3 includes an ultraviolet-absorbing component and, for example, may further include a matrix. The ultraviolet-absorbing component is dispersed in the matrix. In other words, the ultraviolet-absorbing component is dispersed in the ultraviolet-absorbing layer 3. The ultraviolet-absorbing component is not particularly limited as long as the ultraviolet-absorbing component is a component that absorbs an ultraviolet ray. The ultraviolet-absorbing component may be an inorganic ultraviolet-absorbing component or an organic ultraviolet-absorbing component. The inorganic ultraviolet-absorbing component includes, for example, at least one selected from the group consisting of Ti, Zn, and Ce. The ultraviolet-absorbing component preferably includes at least one selected from the group consisting of Zn and Ce. The ultraviolet-absorbing component includes, for example, an oxide. The oxide is preferably an inorganic oxide. The ultraviolet-absorbing component preferably includes cerium oxide. Examples of the organic ultraviolet-absorbing component include a benzotriazole-based ultraviolet absorber (for example, TINUVIN 360 sold by BASF Japan Ltd.) and a benzenethiol-copper complex derivative (for example, EST-5 sold by Sumitomo Seika Chemicals Co., Ltd.).

In terms of reducing cloudiness of the glass laminate 10, the ultraviolet-absorbing component is in the form of fine particles. The ultraviolet-absorbing component preferably includes fine cerium oxide particles. The fine particles of the ultraviolet-absorbing component are, for example, spherical, flaky, or fibrous. The fine particles of the ultraviolet-absorbing component in the ultraviolet-absorbing layer 3 can be confirmed, for example, by X-ray diffraction (XRD) or by observation with a transmission electron microscope. The average particle size of the fine particles of the ultraviolet-absorbing component is, for example, 1 nm to 100 nm, preferably 5 nm to 100 nm, more preferably 5 nm to 30 nm, and even more preferably 5 nm to 15 nm. The average particle size of the fine particles of the ultraviolet-absorbing component can be determined by the following method. First, a cross-section of the ultraviolet-absorbing layer 3 is observed with a transmission electron microscope. The area of one of fine particles on the resulting electron microscope image is calculated by image processing. The diameter of a circle having the same area as the calculated area is regarded as the particle size of the fine particle (the diameter of the fine particle). The particle size was calculated for any number (at least 50) of the fine particles, and the average of the calculated values was regarded as the average particle size of the fine particles.

The percentage content and content of the ultraviolet-absorbing component in the ultraviolet-absorbing layer 3 are appropriately adjusted according to the optical properties required of the ultraviolet-absorbing layer 3 and the physical thickness of the ultraviolet-absorbing layer 3. The percentage content of the ultraviolet-absorbing component in the ultraviolet-absorbing layer 3 is, for example, 3 wt% or more and less than 50 wt%, preferably 10 wt% to 40 wt%, and more preferably 20 wt% to 40 wt%. Another preferred percentage content of the ultraviolet-absorbing component in the ultraviolet-absorbing layer 3 is, for example, 0.1 wt% to 20 wt% and preferably 0.2 wt% to 10 wt%. Yet another preferred percentage content of the ultraviolet-absorbing component in the ultraviolet-absorbing layer 3 is, for example, 40 wt% or more, may be 90 wt% or less or 80 wt% or less. The content of the ultraviolet-absorbing component in the ultraviolet-absorbing layer 3 is, for example, 0.05 mg or more, preferably 0.25 mg or more, more preferably 0.35 mg or more, even more preferably 0.4 mg or more, particularly preferably 0.5 mg or more, and most preferably 0.6 mg or more per cm² of a principal surface of the ultraviolet-absorbing layer 3. The content of the ultraviolet-absorbing component in the ultraviolet-absorbing layer 3 per cm² of a principal surface of the ultraviolet-absorbing layer 3 is determined when the ultraviolet-absorbing layer 3 is viewed in a direction perpendicular to the principal surface. The content of the ultraviolet-absorbing component in the glass laminate 10 may be 0.05 mg or more per cm² of a principal surface of the glass laminate 10. The upper limit of the content of the ultraviolet-absorbing component in the ultraviolet-absorbing layer 3 is not limited to a particular value. To prevent coloring of the ultraviolet-absorbing layer 3, the content of the ultraviolet-absorbing component in the ultraviolet-absorbing layer 3 is, for example, 5.0 mg or less, preferably 2.0 mg or less, and more preferably 1.5 mg or less per cm² of a principal surface of the ultraviolet-absorbing layer 3. When the ultraviolet-absorbing component is cerium oxide, the content of cerium oxide in the ultraviolet-absorbing layer 3 may be 0.25 mg or more and 5.0 mg or less and is preferably 0.35 mg or more, more preferably 0.5 mg or more, and even more preferably 0.6 mg or more per cm² of a principal surface of the ultraviolet-absorbing layer 3 in terms of CeO₂ content. That is, the content of cerium oxide in the glass laminate 10 may be 0.25 mg or more and 5.0 mg or less per cm² of a principal surface of the glass laminate 10 in terms of CeO₂ content. The content of cerium oxide in the ultraviolet-absorbing layer 3 is preferably 2.0 mg or less and more preferably 1.5 mg or less per cm² of a principal surface of the ultraviolet-absorbing layer 3 in terms of CeO₂ content.

In a preferred embodiment of the present invention, the matrix includes a hydrous alkaline silicate. The hydrous alkaline silicate may be hydrated salt of alkali silicate. Examples of the hydrous alkaline silicate include hydrous sodium silicate and hydrous lithium silicate. The hydrous alkaline silicate is preferably hydrous sodium silicate. The matrix includes, for example, the hydrous alkaline silicate as the main component. The matrix may consist essentially of the hydrous alkaline silicate. The matrix may include an organic polymer such as polyvinylpyrrolidone (PVP) in addition to the hydrous alkaline silicate. The percentage content of the organic polymer in the matrix is, for example, 10 wt% or more and may be 20 wt% or more. With too high a percentage content of the organic polymer in the matrix, the foamable interlayer 2 adjacent to the ultraviolet-absorbing layer 3 might deteriorate the matrix and turn the ultraviolet-absorbing layer 3 cloudy. In terms of reducing cloudiness of the ultraviolet-absorbing layer 3, the percentage content of the organic polymer in the matrix is, for example, 85 wt% or less, preferably 75 wt% or less, and more preferably 55 wt% or less.

When the matrix include the hydrous alkaline silicate, the molar ratio (SiO₂/M₂O) of silicon oxide (SiO₂) to an alkali metal oxide (M₂O) is, for example, 1 to 20, preferably 2 to 10, and more preferably 3 to 8 in the matrix. That is, when the matrix includes sodium silicate, the molar ratio (SiO₂/Na₂O) of silicon oxide (SiO₂) to sodium oxide (Na₂O) may be 1 to 20 in the matrix.

The percentage content of the above matrix in the ultraviolet-absorbing layer 3 is, for example, 60 wt% to 95 wt% and preferably 60 wt% to 75 wt%. The ultraviolet-absorbing layer 3 may include the hydrous alkaline silicate as a main component. The ultraviolet-absorbing layer 3 may include hydrous lithium silicate as a main component and may include hydrous sodium silicate as a main component.

When the matrix includes the hydrous alkaline silicate, the water content of the ultraviolet-absorbing layer 3 is, for example, 40 wt% or less and preferably 30 wt% or less. With the water content of the ultraviolet-absorbing layer 3 in an appropriate range, ultraviolet-induced foaming of the ultraviolet-absorbing layer 3 can be reduced. The water content of the ultraviolet-absorbing layer 3 is, for example, 10 wt% or more.

In another preferred embodiment of the present invention, the matrix includes silica as a main component. The percentage content of the silica in the matrix is, for example, more than 50 wt% and preferably 80 wt% or more. The percentage content of the silica in the matrix is preferably 99.5 wt% or less. The matrix may further include another oxide such as an alkali metal oxide in addition to the silica. Examples of the alkali metal oxide included in the matrix include sodium oxide (Na₂O), lithium oxide (Li₂O), and potassium oxide (K₂O). The alkali metal oxide included in the matrix is preferably Na₂O. The molar ratio (R₂O/SiO₂) of the alkali metal oxide to the silica is, for example, 0.001 to 0.5 in the matrix. The molar ratio (R₂O/SiO₂) is preferably 0.01 or more, more preferably 0.02 or more, and even more preferably 0.1 or more. The molar ratio (R₂O/SiO₂) is preferably 0.4 or less, more preferably 0.3 or less, and even more preferably 0.2 or less. In this embodiment, the percentage content of the matrix in the ultraviolet-absorbing layer 3 may be 15 wt% to 70 wt% and preferably 15 wt% to 60 wt%, and the percentage content of the ultraviolet-absorbing component in the ultraviolet-absorbing layer 3 may be 30 wt% to 80 wt% and preferably 40 wt% to 80 wt%.

Because the ultraviolet-absorbing component is in the form of fine particles, aggregation of the ultraviolet-absorbing component tends to be reduced in the matrix. Reduction of aggregation of the ultraviolet-absorbing component reduces cloudiness of the ultraviolet-absorbing layer 3. Therefore, when the ultraviolet-absorbing component is in the form of fine particles, the percentage content of the ultraviolet-absorbing component in the ultraviolet-absorbing layer 3 can be easily increased. In particular, the matrix including the silica as the main component can dramatically increase the percentage content of the ultraviolet-absorbing component compared to the matrix including the hydrous alkaline silicate. An increase in the percentage content of the ultraviolet-absorbing component in the ultraviolet-absorbing layer 3 tends to improve the ultraviolet absorption properties of the ultraviolet-absorbing layer 3.

The ultraviolet-absorbing layer 3 may further include another component in addition to the ultraviolet-absorbing component and the matrix. The other component is, for example, an organic component. Examples of the organic component include a polysaccharide such as xanthan gum and a polyhydric alcohol such as glycerin. The ultraviolet-absorbing layer 3 may include an organic component derived from organosilane or a surfactant used to produce the ultraviolet-absorbing layer 3. The percentage content of the other component in the ultraviolet-absorbing layer 3 is, for example, 30 wt% or less, preferably 20 wt% or less, and more preferably 15 wt% or less. The percentage content of the organic component in the ultraviolet-absorbing layer 3 is, for example, 0.1 wt% or more and may be 30 wt% or less or 20 wt% or less.

The physical thickness of the ultraviolet-absorbing layer 3 is, for example, 0.1 um or more and 200 µm or less. The physical thickness of the ultraviolet-absorbing layer 3 is preferably 0.5 pm or more and more preferably 1.5 pm or more. The physical thickness of the ultraviolet-absorbing layer 3 is preferably 150 pm or less and more preferably 100 pm or less.

Foamable interlayers are commonly basic. Therefore, when a metal oxide thin film formed by thermal decomposition, vacuum deposition, or the like is in direct contact with a foamable interlayer, the metal oxide thin film sometimes deteriorates and turns cloudy. Contact between the metal oxide thin film and the foamable interlayer needs to be avoided to avoid deterioration of the metal oxide thin film. For example, Patent Literature 1 proposes that an ultra-violet radiation screening coating such as a metal oxide thin film should not be brought into direct contact with an intumescent layer (a foamable interlayer) (Claim 1). In the present embodiment, when the ultraviolet-absorbing component is dispersed in the matrix of the ultraviolet-absorbing layer 3, the amount of the ultraviolet-absorbing component in direct contact with the foamable interlayer 2 is small. Therefore, when the ultraviolet-absorbing component is dispersed in the matrix and even in direct contact with the foamable interlayer 2, cloudiness of the ultraviolet-absorbing layer 3 can be sufficiently reduced. In an example, the haze ratio of the ultraviolet-absorbing layer 3 is, for example, 5% or less, preferably less than 3%, more preferably 2% or less, even more preferably less than 1%, particularly preferably 0.6% or less, and most preferably 0.2% or less.

According to Patent Literature 1, in the case where the ultra-violet radiation screening coating is disposed between two glass sheets, an extra glass sheet needs to be disposed between the ultra-violet radiation screening coating and the intumescent layer to avoid contact between the ultra-violet radiation screening coating and the intumescent layer. In Patent Literature 1, the ultra-violet radiation screening coating needs to be used as an outermost layer of a glass laminate to exclude the extra glass sheet. In this case, the ultra-violet radiation screening coating is exposed to physical damage from, for example, sunlight, wind, rain, and dust, which may prevent the ultra-violet radiation screening coating from maintaining the ultraviolet blocking effect for a long period of time. In the case of the glass laminate 10 of the present embodiment, on the other hand, the glass laminate 10 needs no extra glass sheet because of the direct contact of the ultraviolet-absorbing layer 3 with the foamable interlayer 2. Therefore, the glass laminate 10 is thinner and lighter than conventional glass laminates. Furthermore, in the glass laminate 10, the direct contact of the ultraviolet-absorbing layer 3 with the foamable interlayer 2 makes it unnecessary to use the ultraviolet-absorbing layer 3 as an outermost layer of the glass laminate 10.

Example 6 of Patent Literature 1 discloses an ultra-violet radiation screening coating formed by subjecting a mixture of an aqueous chromium oxide solution and an aqueous sodium silicate solution to heat treatment. This ultra-violet radiation screening coating includes chromium oxide as an ultraviolet-absorbing component. The chromium oxide, however, is not in the form of fine particles in the ultra-violet radiation screening coating. Therefore, an increase in the percentage content of the chromium oxide in the ultra-violet radiation screening coating results in aggregation of the chromium oxide, and that turns the ultra-violet radiation screening coating cloudy. It is difficult to achieve both reduction of cloudiness and sufficient ultraviolet absorption performance of the ultra-violet radiation screening coating disclosed in Example 6 of Patent Literature 1.

### (Method for producing glass laminate)

Next, the method for producing the glass laminate 10 of the present embodiment will be described.

First, the ultraviolet-absorbing layer 3 is formed on a surface of the glass sheet 1a. The ultraviolet-absorbing layer 3 can be formed, for example, by the following method. First, a coating liquid for forming the ultraviolet-absorbing layer 3 is prepared. In a preferred embodiment of the present invention, the coating liquid contains the hydrous alkaline silicate and the ultraviolet-absorbing component as solids. The coating liquid may further contain an organic polymer, a polysaccharide, a polyhydric alcohol, etc. as solids. When the coating liquid contains an organic polymer, a polysaccharide, a polyhydric alcohol, etc., occurrence of a crack in the ultraviolet-absorbing layer 3 can be reduced.

In another preferred embodiment of the present invention, the coating liquid contains a silicon alkoxide and/or a hydrolysate thereof and the ultraviolet-absorbing component as solids. The silicon alkoxide is expressed, for example, by the general formula Si(OR)ₙX₄₋ₙ. n is an integer of 1 to 4. n is preferably an integer of 2 to 4. OR represents an alkoxy group. Each R is independently a hydrocarbon group having 1 to 4 carbon atoms. In other words, the number of carbon atoms in the alkoxy group bonded to the Si atom is 1 to 4 in the silicon alkoxide. Examples of the alkoxy group include methoxy, ethoxy, propoxy, and butoxy groups. X represents a non-hydrolyzable functional group. Each X may be independently an optionally substituted hydrocarbon group having 1 to 6 carbon atoms. Examples of the hydrocarbon group having 1 to 6 carbon atoms include methyl, ethyl, propyl, isopropyl, butyl, pentyl, phenyl, and 3-glycidoxypropyl groups. Examples of the silicon alkoxide include tetramethoxysilane, tetraethoxysilane, tetraisopropoxysilane, methyltrimethoxysilane, methyltriethoxysilane, dimethyldiethoxysilane, diethyldiethoxysilane, phenyltriethoxysilane, and 3-glycidoxypropyltrimethoxysilane.

The concentration of the solids in the coating liquid can be appropriately adjusted depending on the physical thickness of the ultraviolet-absorbing layer 3 and the method for applying the coating liquid. The concentration of the solids in the coating liquid is, for example, 0.01 wt% or more and 75 wt% or less. The concentration of the solids in the coating liquid is preferably 10 wt% or less. Another preferred concentration of the solids in the coating liquid is 10 wt% to 40 wt%. Yet another preferred concentration of the solids in the coating liquid is 30 wt% to 70 wt%.

The coating liquid, for example, contains water or an organic solvent as a solvent. The organic solvent is preferably one in which the silicon alkoxide and/or a hydrolysate thereof can dissolve. Examples of the organic solvent include alcohols having 1 to 4 carbon atoms and substitution products thereof. Examples of the alcohols having 1 to 4 carbon atoms include methanol, ethanol, propanol, and butanol. Examples of the substitution products include propylene glycol monomethyl ether. The organic solvent may contain an alcohol different from the alcohols having 1 to 4 carbon atoms.

The solvent of the coating liquid containing the hydrous alkaline silicate contains, for example, water as the main component. The solvent of the coating liquid preferably contains 70 wt% or more of water and more preferably 90 wt% or more of water, or may consist of water.

The coating liquid may further contain a surfactant. When the coating liquid contains the surfactant, the percentage content of the surfactant in the coating liquid is preferably 0.1 wt% or less and more preferably 0.01 wt% or less. Siloxane-polyalkylene oxide copolymer, for example, can be used as the surfactant.

Next, the coating liquid is applied to a surface of the glass sheet 1a. A known method such as spin coating, roll coating, bar coating, dip coating, spray coating, slot-die coating, or a method using an applicator may be used as the method for applying the coating liquid to a surface of the glass sheet 1a. Spray coating is superior in terms of mass production efficiency. Roll coating and bar coating are superior in terms of uniformity of the appearance of the resulting liquid film as well as mass production efficiency. Another method for applying the coating liquid is, for example, the following method. First, on a surface of the glass sheet 1a is disposed a frame by which the surface of the glass sheet 1a is framed and which is tall in the thickness direction of the glass sheet 1a. The frame is made of, for example, a resin such as silicone or glass. The coating liquid is poured onto the surface of the glass sheet 1a, the surface being framed by the frame. The coating liquid can thus be applied to the surface of the glass sheet 1a. According to this method, as later described, the ultraviolet-absorbing layer 3 can be formed without removing the frame, and even the foamable interlayer 2 can be formed on the ultraviolet-absorbing layer 3 without removing the frame. That is, an aqueous alkaline silicate solution for forming the foamable interlayer 2 can be poured onto the ultraviolet-absorbing layer 3 without removing the frame. As just described, the use of the frame can simplify the method for producing the glass laminate 10.

A liquid film is formed by applying the coating liquid to the glass sheet 1a. The thickness of the liquid film is not limited to a particular value and is, for example, 5 pm to 5.0 mm and may be 20 pm to 5.0 mm. The thickness of the liquid film can be adjusted to 1 pm to 60 pm by means of slot-die coating.

Next, the liquid film formed on the glass sheet 1a is dried to obtain the glass sheet 1a with the ultraviolet-absorbing layer 3. In the case where the coating liquid has been applied to the surface of the glass sheet 1a by the method using the frame, the liquid film may be dried with the frame disposed on the surface of the glass sheet 1a.

The method for drying the liquid film is not limited to a particular one, and can be appropriately selected depending on the solids concentration of the coating liquid, the thickness of the liquid film, etc. A first example and a second example of preferred drying methods will be described hereinafter.

In the first example of the preferred drying method, the highest temperature which the surface of the liquid film reaches is 50°C or higher and lower than 300°C, preferably 80°C or higher and 250°C or less, more preferably 90°C or higher and 220°C or lower, and even more preferably 100°C or higher and 200°C or lower. In this case, it is preferred that the period of time during which the surface temperature of the liquid film is 60°C or higher (preferably 80°C or higher and more preferably 100°C or higher) be two seconds or longer (preferably 10 seconds or longer and more preferably 18 seconds or longer). Hereinafter, the first example may be referred to as "low-temperature drying."

In the second example of the preferred drying method, the highest temperature which the surface of the liquid film reaches is 300°C or higher, preferably 400°C or higher, and more preferably 500°C or higher. In the second example, the upper limit of the highest temperature which the surface of the liquid film reaches is, for example, but not particularly limited to, lower than the temperature at and above which the glass sheet 1a deforms. In the second example, the heating for drying the liquid film can double as heating performed in the step of shaping the glass sheet 1a by heating. In the second example, the period of time during which the surface of the liquid film has the highest temperature is not particularly limited. The period of time during which the above temperature is maintained may be short as long as the highest temperature is the above temperature. Hereinafter, the second example may be referred to as "high-temperature drying."

The drying step may be performed, for example, by hot-air drying. Alternatively, the drying step may be performed by placing the glass sheet 1a to which the liquid film has been applied in a heating furnace set at a given temperature for a given period of time. In a preferred example, the drying step may be performed by placing the glass sheet 1a to which the liquid film has been applied in a thermostat bath set at a temperature of 70°C to 110°C for several hours, for example, 3 to 24 hours. The composition of the resulting ultraviolet-absorbing layer 3 essentially corresponds to the composition of the solids in the coating liquid.

Next, the foamable interlayer 2 is formed on the surface of the ultraviolet-absorbing layer 3. The foamable interlayer 2 can be formed, for example, by the following method. First, on the surface of the ultraviolet-absorbing layer 3 is disposed a frame by which the surface of the ultraviolet-absorbing layer 3 is framed and which is tall in the thickness direction of the ultraviolet-absorbing layer 3. As this frame may be directly used the frame disposed on the surface of the glass sheet 1a to apply the coating liquid to the surface of the glass sheet 1a. Then, an aqueous alkaline silicate solution is poured onto the surface of the ultraviolet-absorbing layer 3, the surface being framed by the frame. The percentage content of the solids in the aqueous alkaline silicate solution is, for example, 28 wt% to 40 wt%. The aqueous alkaline silicate solution is subjected to heat treatment to form the foamable interlayer 2. JP H08-226287 A, JP 2000-344553 A, etc. disclose a method of forming a foamable interlayer in detail.

Next, the glass sheet 1b is disposed on the foamable interlayer 2. The resulting laminate is subjected to pressure treatment or heat treatment. This joins the glass sheet 1b and the foamable interlayer 2 to obtain the glass laminate 10.

### <Embodiment 2>

The glass laminate 10 may include three or more glass sheets 1, for example, three to ten glass sheets 1. Moreover, the glass laminate 10 may include two or more foamable interlayers 2, for example, two to nine foamable interlayers 2. A glass laminate 20 of FIG. 2 includes six glass sheets 1a, 1b, 1c, 1d, 1e, and 1f and five foamable interlayers 2a, 2b, 2c, 2d, and 2e. The structure of the glass laminate 20 is the same as the structure of the glass laminate 10 of the embodiment 1, except for the number of the glass sheets 1 and the number of the foamable interlayers 2. Therefore, the elements common between the glass laminate 10 of the embodiment 1 and the glass laminate 20 of the present embodiment are denoted by the same reference characters, and the description of such elements may be omitted. That is, the description of each of the following embodiments is applicable to the other embodiments unless technical inconsistency occurs. Furthermore, the features of the embodiments may be combined with each other unless technical inconsistency occurs.

In the glass laminate 20, the plurality of glass sheets 1 and the plurality of foamable interlayers 2 are alternately arranged in the thickness direction of the glass laminate 20. Each of the plurality of foamable interlayers 2 is disposed between two glass sheets 1 selected from the plurality of glass sheets 1. The ultraviolet-absorbing layer 3 is disposed between the glass sheet 1a and the foamable interlayer 2a. In the glass laminate 20, one principal surface of the ultraviolet-absorbing layer 3 is in contact with a principal surface of the glass sheet 1a. The other principal surface of the ultraviolet-absorbing layer 3 is in contact with a principal surface of the foamable interlayer 2a. The glass laminate 20 is used in such a manner that the ultraviolet-absorbing layer 3 is located closer to a side from which an ultraviolet ray is incident than the plurality of foamable interlayers 2 is.

With the plurality of foamable interlayers 2, the glass laminate 20 is highly fire resistant. Moreover, with the ultraviolet-absorbing layer 3 disposed closer to a side from which an ultraviolet ray is incident than the plurality of foamable interlayers 2 is, ultraviolet-induced cloudiness of the glass laminate 20 is sufficiently reduced.

According to Patent Literature 1, as described above, in the case where the ultra-violet radiation screening coating is disposed between the two glass sheets, the extra glass sheet needs to be disposed between the ultra-violet radiation screening coating and the intumescent layer to avoid contact between the ultra-violet radiation screening coating and the intumescent layer. In the case of the glass laminate 20 of the present embodiment, the glass laminate 20 needs no extra glass sheet because of the direct contact of the ultraviolet-absorbing layer 3 with the foamable interlayer 2a. Therefore, the thickness of the glass laminate 20 can be adjusted to, for example, less than 27 mm, preferably 25 mm or less, and more preferably 23 mm or less.

The glass laminate 20 may include a plurality of ultraviolet-absorbing layers. For example, the glass laminate 20 may further include an ultraviolet-absorbing layer between the glass sheet 1f and the foamable interlayer 2e.

### <Embodiment 3>

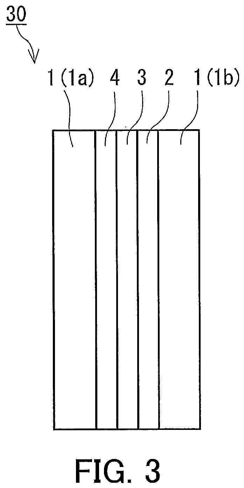

As shown in FIG. 3, a glass laminate 30 of an embodiment 3 further includes an underlayer 4 disposed between the glass sheet 1a and the ultraviolet-absorbing layer 3. The underlayer 4 is, for example, in contact with both the glass sheet 1a and the ultraviolet-absorbing layer 3. The structure of the glass laminate 30 is the same as the structure of the glass laminate 10 of the embodiment 1, except for the underlayer 4.

The underlayer 4 is suitable for improving the firm attachment and close contact between the glass sheet 1a and the ultraviolet-absorbing layer 3. The underlayer 4 also serves as a protective layer of the ultraviolet-absorbing layer 3. The underlayer 4 includes, for example, silica and an alkali metal oxide, preferably consists essentially of silica and an alkali metal oxide. Examples of the alkali metal oxide included in the underlayer 4 include sodium oxide (Na₂O), lithium oxide (Li₂O), and potassium oxide (K₂O). The alkali metal oxide included in the underlayer 4 may be the same as an alkali metal oxide included in the hydrous alkaline silicate in the foamable interlayer 2 or may be different therefrom. The ultraviolet-absorbing layer 3 tends to be stable when disposed between the underlayer 4 including the silica and the alkali metal oxide and the foamable interlayer 2 having the same components as that of the underlayer 4.

The percentage content of the silica in the underlayer 4 is, for example, higher than the percentage content of the alkali metal oxide in the underlayer 4. The molar ratio (R₂O/SiO₂) of the alkali metal oxide to the silica in the underlayer 4 is preferably 0 to 1, more preferably 0.05 to 1, even more preferably 0.066 to 0.33, and particularly preferably 0.125 to 0.3. The percentage content of the alkali metal oxide in the underlayer 4 may be nearly equal to or lower than the percentage content of the alkali metal oxide in the foamable interlayer 2. When the molar ratio (R₂O/SiO₂) of the alkali metal oxide to the silica in the underlayer 4 is defined as R1 and the molar ratio (R₂O/SiO₂) of an alkali metal oxide to silica in the foamable interlayer 2 is defined as R2, the ratio (R1/R2) of R1 to R2 may be 0.5 to 1.2. Additionally, the percentage content of an ultraviolet-absorbing component in the underlayer 4 is, for example, lower than the percentage content of the ultraviolet-absorbing component in the ultraviolet-absorbing layer 3 and is preferably 0.1 wt% or less. The underlayer 4 preferably does not include the ultraviolet-absorbing component.

The thickness of the underlayer 4 is, for example, 50 pm or less, preferably 1 to 40 pm, more preferably 2 to 30 pm, even more preferably 5 to 25 pm, and particularly preferably 10 to 20 um. With the underlayer 4 having a thickness of 2 pm or more, the firm attachment and the close contact between the glass sheet 1a and the ultraviolet-absorbing layer 3 tend to be improved further. The underlayer 4 having a thickness of 50 pm or less is less likely to be foamed by ultraviolet irradiation even when the underlayer 4 includes the alkali metal oxide.

The method for producing the underlayer 4 is not limited to a particular one. For example, when the foamable interlayer 2 is formed, the aqueous alkaline silicate solution which is the material of the foamable interlayer 2 sometimes permeates the ultraviolet-absorbing layer 3. The aqueous alkaline silicate solution is likely to permeate the ultraviolet-absorbing layer 3 particularly when the matrix of the ultraviolet-absorbing layer 3 includes silica as the main component. The aqueous alkaline silicate solution having permeated the ultraviolet-absorbing layer 3 sometimes further penetrates between the glass sheet 1a and the ultraviolet-absorbing layer 3. The underlayer 4 can be produced by heat treatment of the aqueous alkaline silicate solution having penetrated between the glass sheet 1a and the ultraviolet-absorbing layer 3.

### EXAMPLES

Hereinafter, the present invention will be described in more detail by examples.

### [Example 1]

### (Production of glass laminate)

First, a coating liquid for forming an ultraviolet-absorbing layer was prepared by the following method. An amount of 17.50 g of an aqueous dispersion of fine cerium oxide particles (Needlal B-10 manufactured by Taki Chemical Co., Ltd., primary particle diameter: 8 nm, secondary particle diameter: 20 nm, pH: 8, solids concentration: 10 wt%), 58.15 g of a solution of silicate of soda (liquid glass no. 3) (SiO₂: 30 wt%, Na₂O: 10 wt%, water: 60 wt%, manufactured by KISHIDA CHEMICAL Co., Ltd.), and 24.35 g of purified water were stirred and mixed to produce a raw material liquid. An amount of 20 g of the raw material liquid and 80 g of purified water were mixed to dilute the raw material liquid. A coating liquid was thus obtained. The concentration of solids in the coating liquid was 5 wt%. The weight of cerium oxide was 7 wt% with respect to the weight of the solids. The weight of silicate of soda was 93 wt% with respect to the weight of the solids.

Next, a glass sheet was prepared. The glass sheet used was a float glass sheet (manufactured by Nippon Sheet Glass Co., Ltd.) whose composition was that of a common soda-lime silicate. The glass sheet had a thickness of 2.8 mm. The glass sheet was cut to 100 × 100 mm. Then, the glass sheet was immersed in an alkaline solution and washed using an ultrasonic cleaner. Afterwards, the glass sheet was washed with deionized water and then dried.

A frame (outer dimensions: 100 × 100 mm, inner dimensions: 88 × 88 mm, thickness: 10 mm) made of a silicone resin was disposed on one principal surface of the glass sheet. The surface of the glass sheet was framed by the frame. A stainless steel jig (outer dimensions: 100 × 100 mm, inner dimensions: 88 × 88 mm, thickness: 2 mm) was disposed on the frame. The glass sheet, the frame, and the jig were held by clamps to fix them. Specifically, the outer edges (four sides) of the glass sheet, the frame, and the jig were held by four clamps. The glass sheet and the frame were thereby brought into close contact.

Subsequently, 15.5 mL (16.4 g) of a coating liquid was introduced onto the surface of the glass sheet, the surface being framed by the frame. The coating liquid was introduced using a push-button micropipette. The coating liquid spread all over the surface of the glass sheet, the surface being framed by the frame. The liquid film formed of the coating liquid had a thickness of 2.0 mm.

Subsequently, the glass sheet on which the liquid film was arranged was disposed in a thermo-hygrostat set at a temperature of 50°C for 5 hours to dry and harden the liquid film. The glass sheet was taken out of the thermo-hygrostat and left to cool to room temperature. An ultraviolet-absorbing layer-attached glass sheet was thus obtained.

Next, 31.0 mL of a solution of silicate of soda (liquid glass no. 3) was introduced onto the surface of the ultraviolet-absorbing layer, the surface being framed by the frame. The solution of silicate of soda spread all over the surface of the ultraviolet-absorbing layer, the surface being framed by the frame. The liquid film formed of the solution of silicate of soda had a thickness of 4 mm.

Subsequently, the ultraviolet-absorbing layer-attached glass sheet on which the liquid film was arranged was disposed in a thermo-hygrostat set at a temperature of 80°C to evaporate some water contained in the liquid film. The ultraviolet-absorbing layer-attached glass sheet was taken out of the thermo-hygrostat and left to cool to room temperature. The frame was taken off to obtain a glass sheet having an ultraviolet-absorbing layer and a foamable interlayer in this order was thus obtained.

Next, a glass sheet having the same composition and dimensions as those of the glass sheet having the ultraviolet-absorbing layer and the foamable interlayer in this order was prepared. This glass sheet was washed in the same manner as the one previously described. The washed glass sheet was disposed on the foamable interlayer. The glass sheet and the foamable interlayer were press-bonded by pressing the glass sheet. The resulting laminate was disposed in an autoclave and treated under conditions of 125°C and 15 atm for 1 hour to obtain a glass laminate of Example 1.

### (Light transmittance of ultraviolet-absorbing layer)

The light transmittance of the ultraviolet-absorbing layer included in the glass laminate of Example 1 was evaluated by the following method. First, an ultraviolet-absorbing layer-attached glass sheet was produced in the same manner as in Example 1. A transmittance curve (transmission spectrum) of the ultraviolet-absorbing layer-attached glass sheet was obtained using a spectrophotometer (U-4100 manufactured by Hitachi High-Technologies Corporation). A transmission spectrum of the ultraviolet-absorbing layer was calculated based on a transmission spectrum of the glass sheet on which the ultraviolet-absorbing layer had yet to be formed and the transmission spectrum of the ultraviolet-absorbing layer-attached glass sheet. The light transmittance of the ultraviolet-absorbing layer at a wavelength of 380 nm (T 380) was obtained from the transmission spectrum of the ultraviolet-absorbing layer. This transmittance was regarded as the light transmittance of the ultraviolet-absorbing layer included in the glass laminate of Example 1 at a wavelength of 380 nm. The result is shown in Table 1.

### (Physical thickness of ultraviolet-absorbing layer)

The physical thickness of the ultraviolet-absorbing layer included in the glass laminate of Example 1 was evaluated by the following method. First, an ultraviolet-absorbing layer-attached glass sheet as produced in the same manner as in Example 1 was prepared. A portion of the ultraviolet-absorbing layer was scraped off with a box cutter to expose a portion of the surface of the glass sheet. The ultraviolet-absorbing layer-attached glass sheet was washed with ethanol and then dried to produce a sample to be subjected to thickness measurement. The step height between the surface of the glass sheet and the surface of the ultraviolet-absorbing layer was measured for the sample using a stylus profiler (Alpha-Step D-500 manufactured by KLA-Tencor Corporation) to obtain a physical thickness value of the ultraviolet-absorbing layer. The value was regarded as the physical thickness of the ultraviolet-absorbing layer included in the glass laminate of Example 1. The result is shown in Table 1.

### (Appearance of glass laminate)

The appearance of the glass laminate of Example 1 was visually evaluated. The glass laminate was completely free of cloudiness and had a good appearance.

### [Example 2]

A glass laminate of Example 2 was obtained in the same manner as in Example 1, except that 11.03 g of the aqueous dispersion of fine cerium oxide particles, 75.99 g of the solution of silicate of soda, 3.50 g of glycerin (special grade, manufactured by KISHIDA CHEMICAL Co., Ltd.), and 9.48 g of purified water were stirred and mixed to produce a raw material liquid, that the raw material liquid was used directly as a coating liquid, and that the amount of the coating liquid introduced was adjusted so that the liquid film formed of the coating liquid would have a thickness of 0.6 mm. The concentration of solids in the coating liquid used in Example 2 was 35 wt%. The weight of cerium oxide was 3.2 wt% with respect to the weight of the solids. Moreover, the light transmittance and the physical thickness of the ultraviolet-absorbing layer included in the glass laminate of Example 2 were evaluated in the same manner as in Example 1. The results are shown in Table 1.

### [Example 3]

A glass laminate of Example 3 was obtained in the same manner as in Example 1, except that glycerin (special grade, manufactured by KISHIDA CHEMICAL Co., Ltd.) was added to the raw material liquid of the coating liquid, that the raw material liquid of the coating liquid was prepared so that the ultraviolet-absorbing layer would have the composition as shown in Table 1, that 30 g of the raw material liquid and 70 g of purified water were mixed to prepare the coating liquid, and that the amount of the coating liquid introduced was adjusted so that the liquid film formed of the coating liquid would have a thickness of 1.0 mm. Moreover, the light transmittance and the physical thickness of the ultraviolet-absorbing layer included in the glass laminate of Example 3 were evaluated in the same manner as in Example 1. The results are shown in Table 1.

### [Example 4]

A glass laminate of Example 4 was obtained in the same manner as in Example 1, except that polyvinylpyrrolidone (PITZCOL K-90 manufactured by DKS Co., Ltd., weight-average molecular weight: 1,200,000) was added to the raw material liquid of the coating liquid, that the raw material liquid of the coating liquid was prepared so that the ultraviolet-absorbing layer would have the composition as shown in Table 1, and that 10 g of the raw material liquid and 90 g of purified water were mixed to prepare the coating liquid. Moreover, the light transmittance and the physical thickness of the ultraviolet-absorbing layer included in the glass laminate of Example 4 were evaluated in the same manner as in Example 1. The results are shown in Table 1.

### [Example 5]

A glass laminate of Example 5 was obtained in the same manner as in Example 4, except that the raw material liquid was prepared so that the ultraviolet-absorbing layer would have the composition as shown in Table 1. Moreover, the light transmittance and the physical thickness of the ultraviolet-absorbing layer included in the glass laminate of Example 5 were evaluated in the same manner as in Example 1. The results are shown in Table 1.

### [Example 6]

A glass laminate of Example 6 was obtained in the same manner as in Example 4, except that the raw material liquid was prepared so that the ultraviolet-absorbing layer would have the composition as shown in Table 1. Moreover, the light transmittance and the physical thickness of the ultraviolet-absorbing layer included in the glass laminate of Example 6 were evaluated in the same manner as in Example 1. The results are shown in Table 1.

### [Example 7, not according to the invention]

A glass laminate of Example 7 was obtained in the same manner as in Example 1, except that glycerin (special grade, manufactured by KISHIDA CHEMICAL Co., Ltd.) was added to the raw material liquid of the coating liquid, that the raw material liquid of the coating liquid was prepared so that the ultraviolet-absorbing layer would have the composition as shown in Table 1, and that 25 g of the raw material liquid and 75 g of purified water were mixed to prepare the coating liquid. Moreover, the light transmittance and the physical thickness of the ultraviolet-absorbing layer included in the glass laminate of Example 7 were evaluated in the same manner as in Example 1. The results are shown in Table 1.

### [Example 8]

A glass laminate of Example 8 was obtained in the same manner as in Example 4, except that the solution of silicate of soda was not added to the raw material liquid of the coating liquid and that the raw material liquid of the coating liquid was prepared so that the ultraviolet-absorbing layer would have the composition as shown in Table 1. Moreover, the light transmittance and the physical thickness of the ultraviolet-absorbing layer included in the glass laminate of Example 8 were evaluated in the same manner as in Example 1. The results are shown in Table 1.

**[Table 1]**

| | | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Components of ultraviolet-absorbing layer (wt%) | CeO₂ | 7.0 | 3.2 | 15.6 | 35.0 | 35.0 | 35.0 | 1.5 | 35.0 |
| | Silicate of soda | 93.0 | 86.9 | 74.4 | 10.8 | 18.6 | 32.5 | 88.5 | 0 |
| | Polyvinylpyrrolidone | 0 | 0 | 0 | 54.2 | 46.4 | 32.5 | 0 | 65.0 |
| | Glycerin | 0 | 10.0 | 10.0 | 0 | 0 | 0 | 10.0 | 0 |
| Conditions for forming ultraviolet-absorbing layer | Amount of coating liquid (mL) | 15.5 | 4.4 | 7.7 | 15.5 | 15.5 | 15.5 | 15.5 | 15.5 |
| | Amount of coating liquid (mL/m²) | 2002 | 568 | 994 | 2002 | 2002 | 2002 | 2002 | 2002 |
| | Weight of coating liquid (g) | 16.4 | 4.8 | 8.3 | 14.8 | 16.1 | 15.7 | 16.6 | 15.6 |
| | Weight of coating liquid (g/m²) | 2118 | 620 | 1072 | 1911 | 2079 | 2027 | 2144 | 2014 |
| | Thickness of liquid film (mm) | 2.0 | 0.6 | 1.0 | 2.0 | 2.0 | 2.0 | 2.0 | 2.0 |
| | Thickness of liquid film (µm) | 2000 | 600 | 1000 | 2000 | 2000 | 2000 | 2000 | 2000 |
| Properties of ultraviolet-absorbing layer | Physical thickness (pm) | 29.2 | 58.6 | 20.6 | 10.1 | 7.1 | 9.2 | 36.6 | 4.7 |
| | Content of CeO₂ (mg/cm²) | 0.74 | 0.68 | 1.33 | 0.67 | 0.68 | 0.71 | 0.26 | 0.71 |
| | Transmittance at wavelength of 380nm (%) | 44.0 | 45.2 | 44.8 | 47.8 | 46.6 | 30.5 | 77.1 | 42.7 |

In Table 1, the content of cerium oxide per cm² of a principal surface of the ultraviolet-absorbing layer was calculated by the following method. First, the density (mg/cm³) of the ultraviolet-absorbing layer was calculated from the weight of the solids in the coating liquid introduced onto the surface of the glass sheet and the mass of the ultraviolet-absorbing layer. The content (mg/cm²) of cerium oxide per cm² of a principal surface of the ultraviolet-absorbing layer was calculated based on the density of the ultraviolet-absorbing layer, the physical thickness of the ultraviolet-absorbing layer, and the percentage content of cerium oxide in the ultraviolet-absorbing layer.

As can be understood from Table 1, the ultraviolet-absorbing layers of the glass laminates of Examples 1 to 6 and 8 each had a relatively low light transmittance. It is expected that ultraviolet-induced cloudiness of the glass laminates of Examples 1 to 6 and 8 is sufficiently reduced.

### [Example 9]

### (Production of coating liquid)

A coating liquid for forming an ultraviolet-absorbing layer was prepared by the following method. First, 18.8 parts by mass of tetraethoxysilane (Ethyl Silicate 40 manufactured by COLCOAT CO., LTD.), 19.9 parts by mass of a partial hydrolysate of methyltriethoxysilane (manufactured by Shin-Etsu Chemical Co., Ltd.), 51.6 parts by mass of propylene glycol monomethyl ether as a solvent, 8.8 parts by mass of purified water, and 1 N of nitric acid as a hydrolysis catalyst were stirred and mixed. Then, the resulting liquid mixture was stirred for 8 hours with the temperature maintained at 40°C to hydrolyze tetraethoxysilane and methyltriethoxysilane. A hydrolysate solution A was thus obtained.

Subsequently, 65.60 g of the hydrolysate solution A was added to 32.80 g of fine CeO₂ particles (CESL-30N manufactured by DAIICHI KIGENSO KAGAKU KOGYO CO., LTD.) while stirred. An amount of 1.55 g of propylene glycol monomethyl ether as a solvent and 0.05 g of a surfactant (CoatOSil 1211 manufactured by Momentive Performance Materials Japan LLC) were added to the resulting liquid, followed by stirring and mixing to obtain a coating liquid. The weight of silicon oxide was 44.29 wt% in terms of SiO₂ content with respect to the weight of solids in this coating liquid. The weight of a cerium compound was 49.88 wt% in terms of CeO₂ content with respect to the weight of the solids. The weight of an organic component (an organic component derived from organosilane and the surfactant) was 5.83 wt% with respect to the weight of the solids.

### (Production of ultraviolet-absorbing layer)

Next, a glass sheet as used in Example 1 was cut to 300 mm × 300 mm. The glass sheet was washed and dried in the same manner as in Example 1. The glass sheet had a light transmittance of 86.0% at a wavelength of 380 nm.

Then, the coating liquid was applied onto one principal surface of the glass sheet using an applicator (manufactured by YASUDA SEIKI SEISAKUSHO, LTD.). The coating liquid applied had a width of 120 mm. The resulting liquid film had a thickness of 100 pm.

Subsequently, the coating liquid applied onto the glass sheet was dried and hardened in a far-infrared furnace. The drying in the far-infrared furnace was performed using a roller conveyor. The temperature in the far-infrared furnace was set to 200°C, and the conveying speed was set to 0.8 m/min. Under these conditions, it took 150 seconds for the glass sheet to go through the furnace, and the highest temperature which the surface of the glass sheet having the coating liquid thereon reached was 130°C. Afterwards, the glass sheet was left to cool to room temperature. An ultraviolet-absorbing layer-attached glass sheet was thus obtained.

### (Production of glass laminate)

Next, a foamable interlayer was formed on the ultraviolet-absorbing layer by the following method. First, the ultraviolet-absorbing layer-attached glass sheet was cut to 100 mm × 100 mm. In the resulting ultraviolet-absorbing layer-attached glass sheet, one principal surface of the glass sheet was entirely covered by the ultraviolet-absorbing layer. A frame as used in Example 1 was disposed on the ultraviolet-absorbing layer-attached glass sheet. Subsequently, a foamable interlayer was produced in the same manner as in Example 1. This time, an underlayer was formed between the glass sheet and the ultraviolet-absorbing layer. Subsequently, in the same manner as in Example 1, a glass sheet was disposed on the foamable interlayer, the glass sheet and the foamable interlayer were press-bonded, and then the resulting laminate was treated in an autoclave to obtain the glass laminate of Example 9.

### (Light transmittance of ultraviolet-absorbing layer)

The light transmittance of the ultraviolet-absorbing layer included in the glass laminate of Example 9 was evaluated in the same manner as in Example 1. The result is shown in Table 2.

### (Haze ratio of ultraviolet-absorbing layer)

The haze ratio of the ultraviolet-absorbing layer included in the glass laminate of Example 9 was evaluated by the following method. First, an ultraviolet-absorbing layer-attached glass sheet was produced in the same manner as in Example 9. The haze ratio of the ultraviolet-absorbing layer-attached glass sheet was measured using a spectrophotometer (U-4100 manufactured by Hitachi High-Technologies Corporation). The haze ratio of the glass sheet on which the ultraviolet-absorbing layer had yet to be formed was measured in the same manner. The haze ratio of the ultraviolet-absorbing layer was calculated based on the haze ratio of the ultraviolet-absorbing layer-attached glass sheet and the haze ratio of the glass sheet. The result is shown in Table 2.

### (Haze ratio of glass laminate)

The haze ratio of the glass laminate of Example 9 was measured by the same method as that of measuring the haze ratio of the ultraviolet-absorbing layer-attached glass sheet. The result is shown in Table 2.

### (Physical thicknesses of ultraviolet-absorbing layer and underlayer)

The physical thicknesses of the ultraviolet-absorbing layer and the underlayer included in the glass laminate of Example 9 were evaluated by the following method. First, a notch was made in the surface of each of the two glass sheets included in the glass laminate using a commercially-available glass cutter (cutting wheel). The notches were used to break the glass laminate. Then, a cross-section of the glass laminate was observed with a scanning electron microscope (SEM). The SEM used was a field emission scanning electron microscope S-4700 (manufactured by Hitachi High-Technologies Corporation). The physical thicknesses of the ultraviolet-absorbing layer and the underlayer were determined from the resulting electron microscope image. The results are shown in Table 2.

### (Energy dispersive X-ray spectroscopy (EDX) of glass laminate)

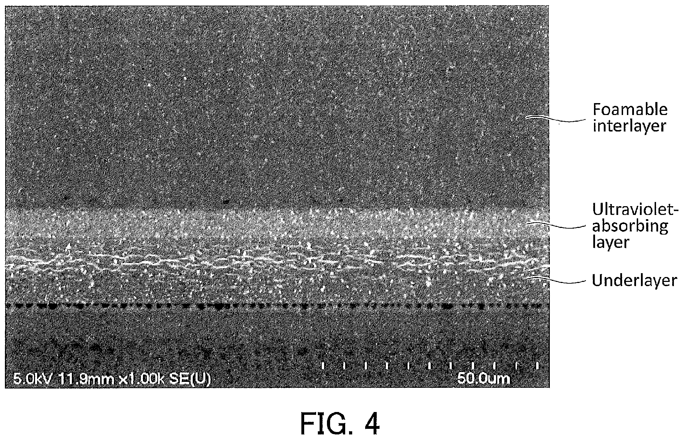

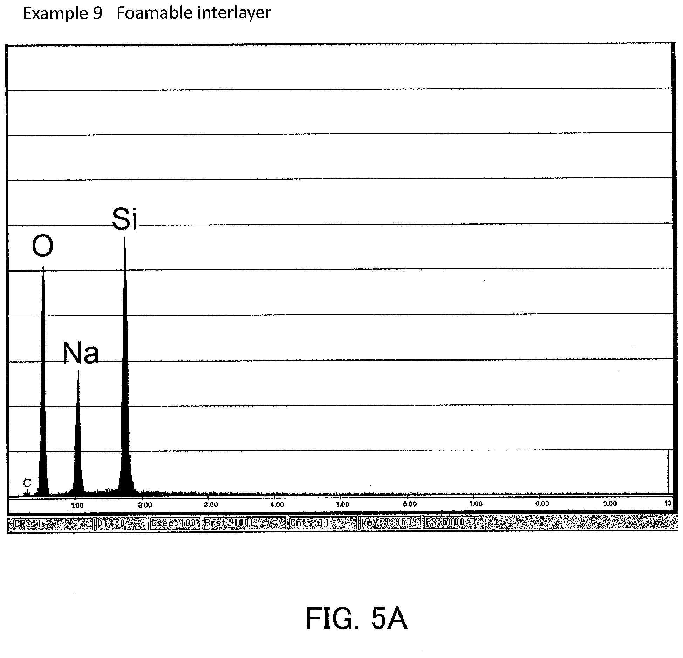

The composition of each layer of the glass laminate of Example 9 was determined by EDX. The EDX was carried out by observing a cross-section of the glass laminate with a SEM. Falcon (manufactured by Hitachi High-Tech Corporation) provided with a SEM (S-4700 manufactured by Hitachi High-Tech Corporation) was used as a detector in the EDX. The accelerating voltage was set to 15 kV in the EDX. A SEM image of the cross-section of the glass laminate of Example 9 is shown in FIG. 4. EDX spectra of the layers included in the glass laminate of Example 9 are shown in FIGS. 5A to 5C.

### [Examples 10 to 20]

Glass laminates of Examples 10 to 20 were obtained in the same manner as in Example 9, except that the components and the physical thickness of the ultraviolet-absorbing layer were changed to the values as shown in Table 2. It should be noted that in Example 10, tetraethoxysilane (TEOS; "KBE-04" manufactured by Shin-Etsu Chemical Co., Ltd.) was used instead of Ethyl Silicate 40. In Example 11, 3-glycidoxypropyltrimethoxysilane (GPTMS; "KBM-403" manufactured by Shin-Etsu Chemical Co., Ltd.) was used instead of methyltriethoxysilane. In Example 12, phenyltrimethoxysilane (PhTMS; "KBM-103" manufactured by Shin-Etsu Chemical Co., Ltd.) was used instead of methyltriethoxysilane. Methyltriethoxysilane was not used in Examples 15 and 16. The physical thickness of the ultraviolet-absorbing layer was adjusted appropriately depending on the components of the ultraviolet-absorbing layer, the amount of the coating liquid applied, and the drying conditions for the coating liquid. In Example 18, while the components and the physical thickness of the ultraviolet-absorbing layer were the same as those in Example 17, the drying conditions for the coating liquid were different from those in Example 17.

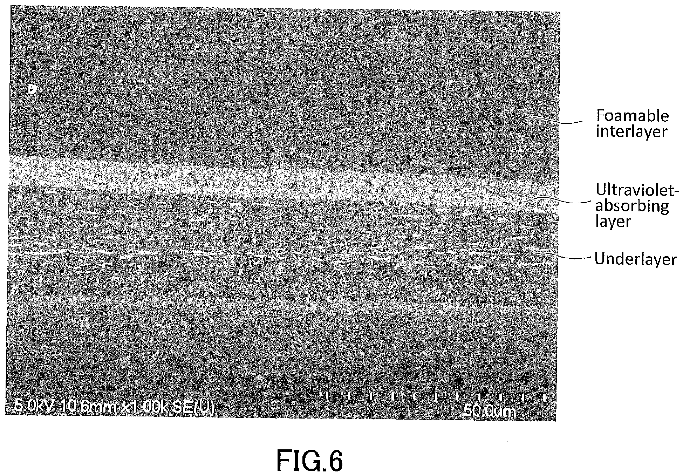

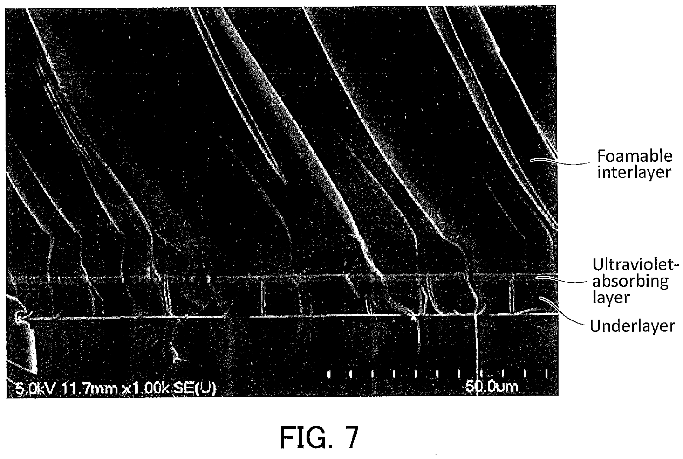

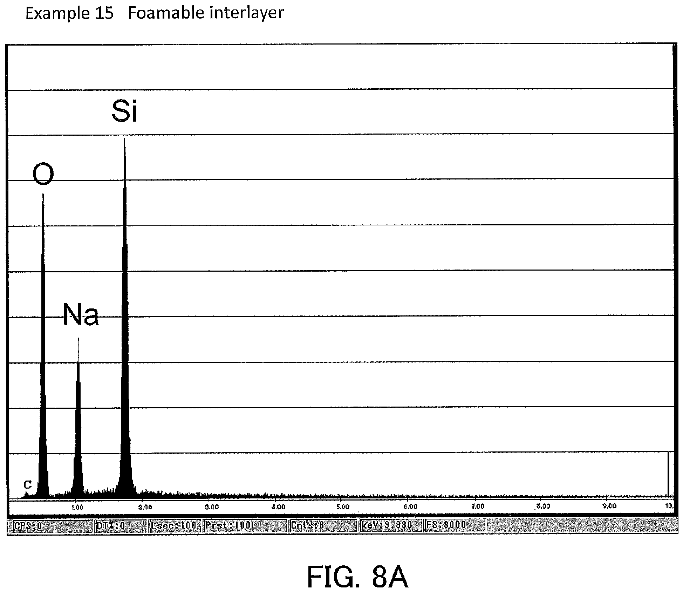

The optical properties of the glass laminates and the ultraviolet-absorbing layers of Examples 10 to 20 and the physical thicknesses of the ultraviolet-absorbing layers and the underlayers of Examples 10 to 20 were evaluated in the same manner as in Example 9. The results are shown in Table 2. Furthermore, cross-sections of the glass laminates of Examples 13 to 15 were observed with a SEM. A SEM image of the cross-section of the glass laminate of Example 13 is shown in FIG. 6. A SEM image of the cross-section of the glass laminate of Example 15 is shown in FIG. 7. The composition of each layer of the glass laminate of Example 15 was determined in the same manner as in Example 9. EDX spectra of the layers included in the glass laminate of Example 15 are shown in FIGS. 8A to 8C.

**[Table 2]**

| | | Ex. 9 | Ex. 10 | Ex. 11 | Ex. 12 | Ex. 13 | Ex. 14 | Ex. 15 | Ex. 16 | Ex. 17 | Ex. 18 | Ex. 19 | Ex. 20 |
|---|---|---|---|---|---|---|---|---|---|---|---|---|---|
| Components of ultraviolet-absorbing layer (wt%) | CeO₂ | 49.9 | 49.9 | 49.9 | 49.9 | 49.9 | 49.9 | 69.8 | 49.9 | 49.9 | 49.9 | 49.9 | 49.9 |
| | Silica | 44.3 | 44.3 | 32.7 | 35.0 | 41.5 | 44.3 | 29.9 | 49.9 | 44.3 | 44.3 | 44.3 | 41.5 |
| | Organic component | 5.8 | 5.8 | 17.4 | 15.1 | 8.6 | 5.8 | 0.2 | 0.2 | 5.8 | 5.8 | 5.8 | 8.6 |
| Conditions for forming ultraviolet-absorbing layer | Amount of coating liquid (mL/m²) | 100 | 100 | 100 | 100 | 100 | 100 | 25 | 45 | 100 | 100 | 100 | 100 |
| | Weight of coating liquid (g/m²) | 106 | 105 | 106 | 106 | 105 | 114 | 27.7 | 47.6 | 106 | 106 | 106 | 105 |
| | Thickness of liquid film (µm) | 100 | 100 | 100 | 100 | 100 | 100 | 25 | 45 | 100 | 100 | 100 | 100 |
| Properties of ultraviolet-absorbing layer | Physical thickness (µm) | 6.7 | 6.3 | 6.0 | 6.3 | 6.9 | 8.6 | 1.9 | 2.3 | 6.1 | 6.1 | 7.6 | 7.2 |
| | Content of CeO₂ (mg/cm²) | 1.04 | 1.03 | 1.05 | 1.05 | 1.03 | 1.68 | 0.38 | 0.47 | 1.04 | 1.04 | 1.04 | 1.03 |
| | Transmittance at wavelength of 380 nm (%) | 24.2 | 20.1 | 22.4 | 23.0 | 22.7 | 24.1 | 47.4 | 48.2 | 21.6 | 22.1 | 22.9 | 22.2 |
| | Haze ratio (%) | 0.2 | 0.18 | 0.08 | 0.15 | 0.44 | 1.01 | 0.4 | 0.11 | 0.35 | 0.15 | 0.49 | 0.72 |
| Underlayer | Physical thickness (µm) | 15.5 | | 21.9 | | 25.5 | 16.2 | 8.5 | | | | 14.4 | 12.6 |
| Laminate | Haze ratio (%) | 0.96 | | | | 1.6 | 1.86 | 1.1 | 1.34 | 1.41 | 1.19 | 1.14 | |

The content of cerium oxide per cm² of a principal surface of the ultraviolet-absorbing layer, in Table 2, was calculated by the following method. First, the density (mg/cm³) of the solids in the liquid film was calculated from the weight of the solids in the coating liquid applied to the surface of the glass sheet and the volume of the liquid film formed of the coating liquid. The content (mg/cm²) of cerium oxide per cm² of a principal surface of the liquid film was calculated based on the density of the liquid film, the thickness of the liquid film, and the rate of cerium oxide in the solids in the coating liquid. Because the amount of the solids in the liquid film is not changed by drying the liquid film, the content of cerium oxide per cm² of a principal surface of the liquid film can be regarded as the content of cerium oxide per cm² of a principal surface of the ultraviolet-absorbing layer.

As can be understood from Table 2, the haze ratio of the glass laminate and the haze ratio of the ultraviolet-absorbing layer were both less than 3% in Examples 9 to 20.

As can be understood from the SEM images in FIGS. 4, 6, and 7, the glass laminates of Examples 9, 13, and 15 each had a laminate structure composed of the foamable interlayer, the ultraviolet-absorbing layer, and the underlayer. This laminate structure was located between the two glass sheets included in the glass laminate. Asperities made on the cross-section by breaking the glass laminate can be confirmed in FIG. 7 in the form of lines extending in a diagonal direction or a vertical direction of the image.

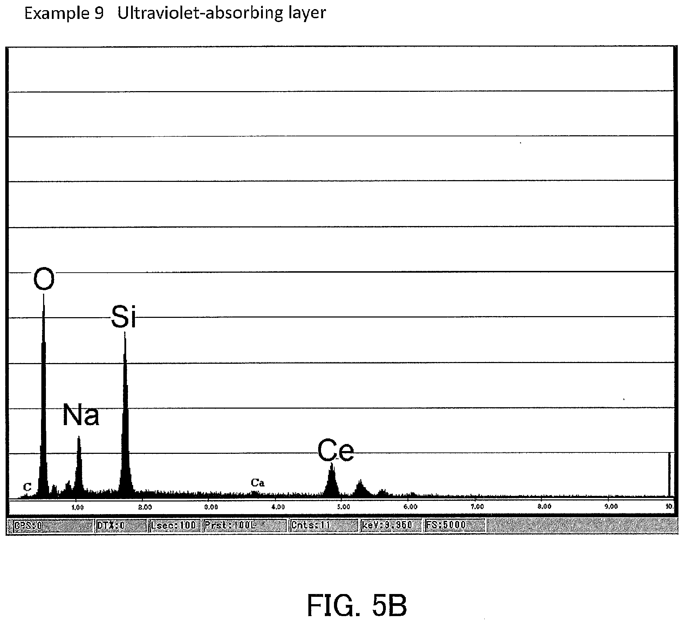

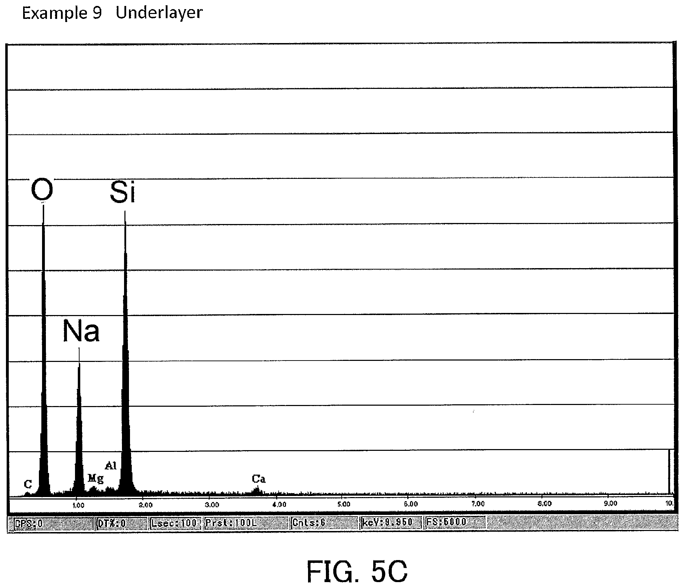

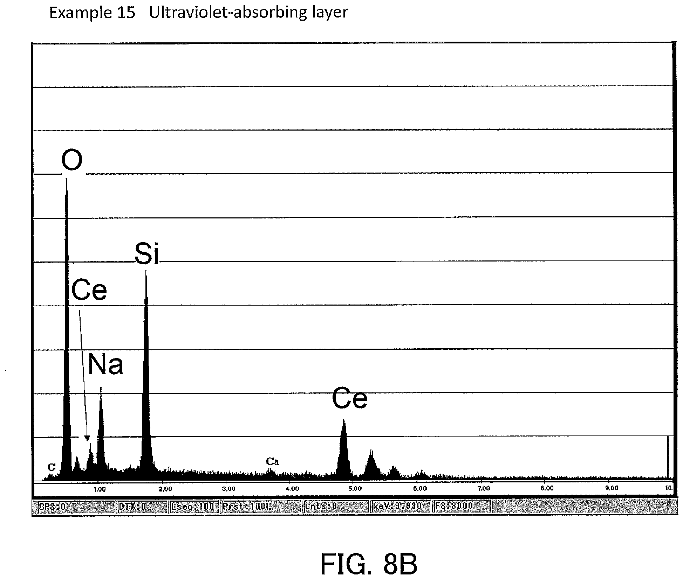

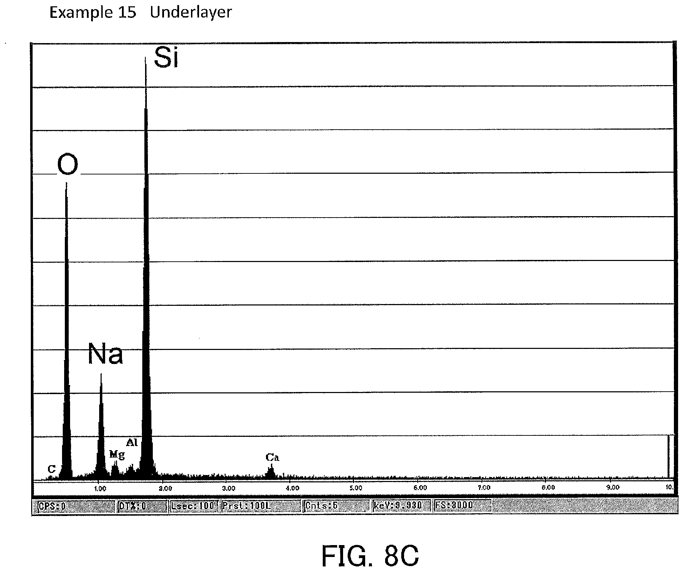

As can be understood from the EDX spectra in FIGS. 5A and 8A, peaks attributed to O, Si, and Na derived from liquid glass were observed for the foamable interlayers of Examples 9 and 15. As can be understood from the EDX spectra in FIGS. 5B and 8B, a peak attributed to Ce derived from cerium oxide serving as an ultraviolet absorber, a peak attributed to Si derived from silica, and a peak attributed to O derived from cerium oxide and silica were observed for the ultraviolet-absorbing layers of Examples 9 and 15. Moreover, a peak attributed to Na was also observed for the ultraviolet-absorbing layer. It is inferred from this that in Examples 9 and 15, a portion of the solution of silicate of soda permeated into the ultraviolet-absorbing layer at the time of the production of the foamable interlayer. As can be understood from the EDX spectra in FIGS. 5C and 8C, a peak attributed to Ce was not observed for the underlayers of Examples 9 and 15. Meanwhile, peaks attributed to Si, O, and Na were observed for the underlayer. As can be understood from comparison between FIG. 5A and FIG. 5C and comparison between FIG. 8A and FIG. 8C, the Na/Si ratio in the underlayer can be smaller than that in the foamable interlayer and can be nearly equal to that in the foamable interlayer.

## Claims

1. A glass laminate (10, 20, 30) comprising:
a plurality of glass sheets (1);
a foamable interlayer (2) comprising a hydrous alkaline silicate and disposed between two glass sheets (1) selected from the plurality of glass sheets; and
an ultraviolet-absorbing layer (3), wherein the ultraviolet-absorbing layer is disposed between one of two outermost glass sheets (1) of the plurality of glass sheets and the foamable interlayer (2),
wherein an ultraviolet-absorbing component in the form of fine particles is dispersed in the ultraviolet-absorbing layer (3), and
the ultraviolet-absorbing layer (3) has a light transmittance of less than 50% at a wavelength of 380 nm, as measured in the description.

2. The glass laminate (10, 20, 30) according to claim 1, wherein:
- the ultraviolet-absorbing layer (3) further comprises a matrix comprising a hydrous alkaline silicate, and
- the content of the ultraviolet-absorbing component in the ultraviolet-absorbing layer (3) is 0.05 mg or more per cm² of a principal surface of the ultraviolet-absorbing layer (3).

3. The glass laminate (10, 20, 30) according to claim 1, wherein:
- the ultraviolet-absorbing layer (3) further comprises a matrix comprising silica as a main component wherein the percentage content of the silica in the matrix is 80 wt% or more, and wherein
- the ultraviolet-absorbing component comprises at least one selected from the group consisting of Zn and Ce and comprises an oxide.

4. The glass laminate (10, 20, 30) according to claim 3, wherein
the ultraviolet-absorbing component includes Ce oxide.

5. The glass laminate (10, 20, 30) according to claim 4, wherein
the ultraviolet-absorbing layer comprises cerium oxide, and
the content of cerium oxide in the ultraviolet-absorbing layer is 0.25 mg or more and 5.0 mg or less per cm² of a principal surface of the ultraviolet-absorbing layer in terms of CeO₂ content.

6. The glass laminate (10, 20, 30) according claim 3, wherein
the ultraviolet-absorbing component includes Zn oxide.

7. The glass laminate (10, 20, 30) according to any one of claims 1 to 6, wherein the percentage content of the ultraviolet-absorbing component in the ultraviolet-absorbing layer (3) is 40 wt% or more and 80 wt% or less.

8. The glass laminate (10, 20, 30) according to any one of claims 1 to 6, wherein the percentage content of the ultraviolet-absorbing component in the ultraviolet-absorbing layer (3) is 3 wt% or more and less than 50 wt%.

9. The glass laminate (10, 20, 30) according to any one of claims 1 to 6, wherein the percentage content of the ultraviolet-absorbing component in the ultraviolet-absorbing layer (3) is 0.1 wt% to 20 wt%.

10. The glass laminate (10, 20, 30) according to any one of claims 1 to 9, wherein:
the ultraviolet-absorbing layer (3) further comprises an organic component, and
the percentage content of the organic component in the ultraviolet-absorbing layer is 0.1 wt% or more.

11. The glass laminate (10, 20, 30) according to claim 10, wherein
the percentage content of the organic component in the ultraviolet-absorbing layer (3) is 30 wt% or less.

12. The glass laminate (10, 20, 30) according to claim 10 or 11, wherein
the ultraviolet-absorbing layer (3) is formed from a coating liquid which contains a silicon alkoxide and/or a hydrolysate thereof having general formula Si(OR)ₙX₄₋ₙ, and further contains the ultraviolet-absorbing component as solids, wherein n is an integer of 1 to 4, OR represents an alkoxy group and each R is independently a hydrocarbon group having 1 to 4 carbon atoms, and each X is independently an optionally substituted hydrocarbon group having 1 to 6 carbon atoms.

13. The glass laminate according to any of claims 2 to 9, wherein:
the ultraviolet-absorbing layer (3) is formed from a coating liquid which contains the hydrous alkaline silicate and the ultraviolet-absorbing component as solids, and
the matrix further comprises an alkali metal oxide, and the molar ratio (R₂O/SiO₂) of the alkali metal oxide to the silica is 0.001 to 0.5.

14. The glass laminate (10, 20, 30) according to any one of claims 1 to 13, wherein:
one principal surface of the ultraviolet-absorbing layer (3) is in contact with a principal surface of one of the two outermost glass sheets of the plurality of glass sheets (1), and
the other principal surface of the ultraviolet-absorbing layer (3) is in contact with a principal surface of the foamable interlayer (2).

15. The glass laminate (10, 20, 30) according to any of claims 1 to 13, further comprising an underlayer (4) having a thickness of 50 pm or less and disposed between one of the two outermost glass sheets of the plurality of glass sheets (1) and the ultraviolet-absorbing layer (3).

## Patentansprüche

1. Glaslaminat (10, 20, 30), umfassend:
eine Vielzahl von Glasplatten (1);
eine schäumbare Zwischenschicht (2), umfassend ein wasserhaltiges alkalisches Silikat und angeordnet zwischen zwei Glasplatten (1) aus der Vielzahl der Glasplatten; und
eine ultraviolettabsorbierende Schicht (3), wobei die ultraviolettabsorbierende Schicht zwischen einer der zwei äußersten Glasplatten (1) der Vielzahl von Glasplatten und der schäumbaren Zwischenschicht (2) angeordnet ist,
wobei eine ultraviolettabsorbierende Komponente in Form von feinen Teilchen in der ultraviolettabsorbierenden Schicht (3) dispergiert ist, und
die ultraviolettabsorbierende Schicht (3) bei einer Wellenlänge von 380 nm eine Lichtdurchlässigkeit von weniger als 50 % aufweist, gemessen wie in der Beschreibung.

2. Glaslaminat (10, 20, 30) nach Anspruch 1, wobei:
- die ultraviolettabsorbierende Schicht (3) ferner eine Matrix umfasst, umfassend ein wasserhaltiges Alkalisilikat, und
- der Gehalt der ultraviolettabsorbierenden Komponente in der ultraviolettabsorbierenden Schicht (3) 0,05 mg oder mehr pro cm² einer Hauptoberfläche der ultraviolettabsorbierenden Schicht (3) ist.

3. Glaslaminat (10, 20, 30) nach Anspruch 1, wobei:
- die ultraviolettabsorbierende Schicht (3) ferner eine Matrix umfasst, umfassend Siliciumdioxid als Hauptkomponente, wobei der prozentuale Gehalt des Siliciumdioxids in der Matrix 80 Gewichts-% oder mehr ist, und wobei
- die ultraviolettabsorbierende Komponente mindestens eines, ausgewählt aus der Gruppe bestehend, aus Zn und Ce umfasst, und ein Oxid umfasst.

4. Glaslaminat (10, 20, 30) nach Anspruch 3, wobei die ultraviolettabsorbierende Komponente Ce-Oxid beinhaltet.

5. Glaslaminat (10, 20, 30) nach Anspruch 4, wobei die ultraviolettabsorbierende Schicht Ceroxid umfasst, und
der Gehalt an Ceroxid in der ultraviolettabsorbierenden Schicht 0,25 mg oder mehr und 5,0 mg oder weniger pro cm² einer Hauptoberfläche der ultraviolettabsorbierenden Schicht, ausgedrückt als CeO₂-Gehalt, ist.

6. Glaslaminat (10, 20, 30) nach Anspruch 3, wobei die ultraviolettabsorbierende Komponente Zn-Oxid beinhaltet.

7. Glaslaminat (10, 20, 30) nach einem der Ansprüche 1 bis 6, wobei der prozentuale Anteil der ultraviolettabsorbierenden Komponente in der ultraviolettabsorbierenden Schicht (3) 40 Gewichts-% oder mehr und 80 Gewichts-% oder weniger ist.

8. Glaslaminat (10, 20, 30) nach einem der Ansprüche 1 bis 6, wobei der prozentuale Gehalt der ultraviolettabsorbierenden Komponente in der ultraviolettabsorbierenden Schicht (3) 3 Gewichts-% oder mehr und weniger als 50 Gewichts-% ist.

9. Glaslaminat (10, 20, 30) nach einem der Ansprüche 1 bis 6, wobei der prozentuale Anteil der ultraviolettabsorbierenden Komponente in der ultraviolettabsorbierenden Schicht (3) 0,1 Gewichts-% bis 20 Gewichts-% ist.

10. Glaslaminat (10, 20, 30) nach einem der Ansprüche 1 bis 9, wobei:
die ultraviolettabsorbierende Schicht (3) ferner eine organische Komponente umfasst, und
der prozentuale Gehalt der organischen Komponente in der ultraviolettabsorbierenden Schicht 0,1 Gewichts-% oder mehr ist.

11. Glaslaminat (10, 20, 30) nach Anspruch 10, wobei
der prozentuale Gehalt der organischen Komponente in der ultraviolettabsorbierenden Schicht (3) 30 Gewichts-% oder weniger ist.

12. Glaslaminat (10, 20, 30) nach Anspruch 10 oder 11, wobei die ultraviolettabsorbierende Schicht (3) aus einer Beschichtungsflüssigkeit gebildet ist, die ein Siliciumalkoxid und/oder ein Hydrolysat davon enthält, das die allgemeine Formel Si(OR)ₙX₄₋ₙ aufweist, und ferner die ultraviolettabsorbierende Komponente als Feststoff enthält, wobei n eine ganze Zahl von 1 bis 4 ist, OR eine Alkoxygruppe darstellt und jedes R unabhängig eine Kohlenwasserstoffgruppe ist, die 1 bis 4 Kohlenstoffatome aufweist, und jedes X unabhängig eine optional substituierte Kohlenwasserstoffgruppe ist, die 1 bis 6 Kohlenstoffatome aufweist.

13. Glaslaminat nach einem der Ansprüche 2 bis 9, wobei:
die ultraviolettabsorbierende Schicht (3) aus einer Beschichtungsflüssigkeit gebildet ist, die das wasserhaltige alkalische Silikat und die ultraviolettabsorbierende Komponente als Feststoffe enthält, und
die Matrix ferner ein Alkalimetalloxid enthält und das Molverhältnis (R₂O/SiO₂) des Alkalimetalloxids zu dem Siliciumdioxid 0,001 bis 0,5 ist.

14. Glaslaminat (10, 20, 30) nach einem der Ansprüche 1 bis 13, wobei:
eine Hauptoberfläche der ultraviolettabsorbierenden Schicht (3) in Kontakt mit einer Hauptoberfläche einer der zwei äußersten Glasplatten der Vielzahl von Glasplatten (1) ist, und
die andere Hauptoberfläche der ultraviolettabsorbierenden Schicht (3) mit einer Hauptoberfläche der schäumbaren Zwischenschicht (2) in Kontakt ist.

15. Glaslaminat (10, 20, 30) nach einem der Ansprüche 1 bis 13, ferner umfassend eine Unterschicht (4), die eine Stärke von 50 µm oder weniger aufweist, die zwischen einer der zwei äußersten Glasplatten der Vielzahl von Glasplatten (1) und der ultraviolettabsorbierenden Schicht (3) angeordnet ist.

## Revendications

1. Stratifié de verre (10, 20, 30) comprenant :
une pluralité de feuilles de verre (1) ;
une couche intermédiaire susceptible de mousser (2) comprenant un silicate alcalin hydraté et disposée entre deux feuilles de verre (1) choisies parmi la pluralité de feuilles de verre ; et
une couche absorbant les ultraviolets (3), laquelle couche absorbant les ultraviolets est disposée entre l'une des deux feuilles de verre les plus extérieures (1) parmi la pluralité de feuilles de verre et la couche intermédiaire susceptible de mousser (2),
dans lequel un composant absorbant les ultraviolets sous la forme de fines particules est dispersé dans la couche absorbant les ultraviolets (3), et
la couche absorbant les ultraviolets (3) a un coefficient de transmission de la lumière inférieur à 50 % à une longueur d'onde de 380 nm, tel que mesuré dans la description.

2. Stratifié de verre (10, 20, 30) selon la revendication 1, dans lequel :
- la couche absorbant les ultraviolets (3) comprend en outre une matrice comprenant un silicate alcalin hydraté, et
- la teneur en le composant absorbant les ultraviolets dans la couche absorbant les ultraviolets (3) est de 0,05 mg ou plus par cm² de surface principale de la couche absorbant les ultraviolets (3).

3. Stratifié de verre (10, 20, 30) selon la revendication 1, dans lequel :
- la couche absorbant les ultraviolets (3) comprend en outre une matrice comprenant de la silice en tant que composant principal dans laquelle le pourcentage en poids de la silice dans la matrice est de 80 % en poids ou plus, et dans lequel
- le composant absorbant les ultraviolets comprend au moins l'un choisi dans le groupe constitué par Zn et Ce et comprend un oxyde.

4. Stratifié de verre (10, 20, 30) selon la revendication 3, dans lequel le composant absorbant les ultraviolets contient de l'oxyde de Ce.

5. Stratifié de verre (10, 20, 30) selon la revendication 4, dans lequel
la couche absorbant les ultraviolets comprend de l'oxyde de cérium, et
la teneur en oxyde de cérium dans la couche absorbant les ultraviolets est de 0,25 mg ou plus et 5,0 mg ou moins par cm² de surface principale de la couche absorbant les ultraviolets en termes de teneur en CeO₂.

6. Stratifié de verre (10, 20, 30) selon la revendication 3, dans lequel le composant absorbant les ultraviolets contient de l'oxyde de Zn.

7. Stratifié de verre (10, 20, 30) selon l'une quelconque des revendications 1 à 6, dans lequel la teneur en pourcentage en le composant absorbant les ultraviolets dans la couche absorbant les ultraviolets (3) est de 40 % en poids ou plus et 80 % en poids ou moins.

8. Stratifié de verre (10, 20, 30) selon l'une quelconque des revendications 1 à 6, dans lequel la teneur en pourcentage en le composant absorbant les ultraviolets dans la couche absorbant les ultraviolets (3) est de 3 % en poids ou plus et inférieure à 50 % en poids.

9. Stratifié de verre (10, 20, 30) selon l'une quelconque des revendications 1 à 6, dans lequel la teneur en pourcentage en le composant absorbant les ultraviolets dans la couche absorbant les ultraviolets (3) est de 0,1 % en poids à 20 % en poids.

10. Stratifié de verre (10, 20, 30) selon l'une quelconque des revendications 1 à 9, dans lequel :
la couche absorbant les ultraviolets (3) comprend en outre un composant organique, et
la teneur en pourcentage en le composant organique dans la couche absorbant les ultraviolets est de 0,1 % en poids ou plus.

11. Stratifié de verre (10, 20, 30) selon la revendication 10, dans lequel la teneur en pourcentage en le composant organique dans la couche absorbant les ultraviolets (3) est de 30 % en poids ou moins.

12. Stratifié de verre (10, 20, 30) selon la revendication 10 ou 11, dans lequel la couche absorbant les ultraviolets (3) est formée à partir d'un liquide de revêtement qui contient un alcoolate de silicium et/ou un hydrolysat de celui-ci de formule générale Si(OR)ₙX₄₋ₙ, et contient en outre le composant absorbant les ultraviolets sous la forme de solides, dans lequel n est un entier de 1 à 4, OR représente un groupe alcoxy et chaque R est indépendamment un groupe hydrocarboné ayant 1 à 4 atomes de carbone, et chaque X est indépendamment un groupe hydrocarboné éventuellement substitué ayant 1 à 6 atomes de carbone.

13. Stratifié de verre selon l'une quelconque des revendications 2 à 9, dans lequel :
la couche absorbant les ultraviolets (3) est formée à partir d'un liquide de revêtement qui contient le silicate alcalin hydraté et le composant absorbant les ultraviolets sous la forme de solides, et
la matrice comprend en outre un oxyde de métal alcalin, et le rapport molaire (R₂O/SiO₂) de l'oxyde de métal alcalin à la silice est de 0,001 à 0,5.

14. Stratifié de verre (10, 20, 30) selon l'une quelconque des revendications 1 à 13, dans lequel :
une surface principale de la couche absorbant les ultraviolets (3) est en contact avec une surface principale de l'une parmi les deux feuilles de verre les plus extérieures parmi la pluralité de feuilles de verre (1), et
l'autre surface principale de la couche absorbant les ultraviolets (3) est en contact avec une surface principale de la couche intermédiaire susceptible de mousser (2).

15. Stratifié de verre (10, 20, 30) selon l'une quelconque des revendications 1 à 13, comprenant en outre une sous-couche (4) ayant une épaisseur de 50 µm ou moins et disposée entre l'une parmi les deux feuilles de verre les plus extérieures parmi la pluralité de feuilles de verre (1) et la couche absorbant les ultraviolets (3).
